# DEMANDE DE BREVET EUROPEEN

(11) **EP 1 026 292 A1**
(43) Date de publication de la demande: **09.08.2000**
(21) Numéro de dépôt: 00400333.1
(22) Date de dépôt: 08.02.2000
(51) Int. Cl.: D01G 25/00, D04H 1/46, D04H 1/70, D04H 3/04, D04H 3/10, D04H 11/04, D04H 11/08, D04H 13/00, B60N 3/04

(54) **Tapis pour véhicule automobile, et moquette aiguilletée destinée notamment à un tel tapis**

(30) Priorité: 08.02.1999 FR 9901434
(71) Demandeur: Centre d'Etudes et Recherche pour l'Automobile ( CERA) S.A., 51100 Reims (FR)
(72) Inventeur: Vandelet, Eric, 60610 La Croix Saint Ouen (FR)
(74) Mandataire: Geismar, Thierry

(57) **Abrégé**

L'invention concerne un tapis (1) pour véhicule automobile, comportant au moins une moquette aiguilletée généralement plane recouverte sur son envers d'au moins une matière de revêtement.

La moquette possède une densité en fibres différenciée dans au moins une direction de son plan. Elle peut posséder une densité en fibres différenciée dans les deux direction de son plan.

Application aux tapis d'habitacle.

## Description

La présente invention concerne un tapis, notamment d'habitacle, pour véhicule automobile, une moquette aiguilletée destinée notamment à la réalisation d'un tel tapis, ainsi que le procédé de fabrication de cette moquette et un dispositif pour la mise en oeuvre de ce procédé, et plus particulièrement un tel tapis comportant au moins une moquette aiguilletée généralement plane recouverte sur son envers par enduction, par extrusion couchage ou par un autre procédé de dépose, d'au moins une matière de revêtement formant par exemple masse lourde insonorisante, ou support d'accrochage.

Par "généralement plane", on entend une moquette dont la surface est à peu près plane, compte tenu des différences d'épaisseur que cette moquette peut présenter par endroits, mais qui peut être ensuite conformée en trois dimensions. Par exemple, une moquette utilisée pour la fabrication d'un tapis de sol de véhicule automobile présente en général, après réalisation du tapis, des renfoncements au niveau des pieds des utilisateurs, et est au contraire relevée sur les bords du véhicule et au niveau de la cloison séparant l'habitacle du compartiment moteur, ainsi que du tunnel de transmission dans les véhicules à propulsion arrière.

Les tapis d'habitacle sont bien connus dans la technique. Ils ont en général deux fonctions, l'une visant à conférer à l'habitacle l'aspect souhaité, et l'autre d'isolant acoustique.

La première fonction est remplie par le fait que ces tapis ont leur surface supérieure recouverte de moquette. Cette moquette est en général du type aiguilletée, c'est-à-dire réalisée à partir d'une nappe de fibres ayant subi un traitement connu sous le nom d'aiguilletage.

Ces tapis présentent comme premier inconvénient leur coût, dû au fait que leur densité de fibres doit être élevée pour des raisons de résistance à l'usure, d'esthétique et de confort. Mais cette densité est inutile dans les zones où ces tapis ne sont pas apparents, par exemple sous les sièges du véhicule.

Un autre inconvénient réside dans le fait qu'ils sont très sensibles au frottement des pieds des passagers et donc susceptibles d'être relativement rapidement usés.

La présente invention vise à pallier ces inconvénients.

On connaît par le document FR-A-2 757 116 des flans non complexés thermoformables, notamment pour des tapis d'habitacle de véhicules automobiles, dans lesquels l'enduction possède une masse surfacique inhomogène.

Cette inhomogénéité vise à obtenir certaines performances sur le plan acoustique. Elle ne concerne toutefois que la masse lourde déposée sur l'envers du tapis et ne présente aucun rapport avec la moquette formant l'endroit du tapis.

On connaît également par le document FR-A-2 759 710 un dispositif permettant de réaliser des nappes de fibres profilées en déposant sur un convoyeur de sortie des segments de voile transversaux successifs reliés le uns aux autres par des plis réalisés alternativement dans un sens et dans l'autre par inversion du sens transversal dans lequel le voile est déposé.

Ce dispositif permet de mettre en oeuvre un procédé comprenant généralement l'étape consistant à réaliser une nappe de fibres comportant des bandes longitudinales de densités différentes. Dans ce document, on dépose des plis de largeur variable sur le convoyeur de manière à obtenir des bandes longitudinales possédant des densités de fibres variables.

Le document EP-A-0 315 930 décrit un procédé visant au même but que le précédent mais dans lequel on obtient des bandes longitudinales possédant des densités de fibres variables en faisant varier la vitesse à laquelle on dépose le voile sur le convoyeur de sorte que ce voile est plus ou moins étiré et possède par conséquent un plus ou moins grande épaisseur.

L'invention a pour but de fournir un tapis d'habitacle pour véhicule automobile qui soit relativement peu onéreux, tout en présentant dans les zones appropriées une bonne résistance aux frottements, ainsi qu'un aspect et un confort convenable.

L'invention a également pour but de fournir une moquette susceptible d'être utilisée pour la fabrication d'un tel tapis.

L'invention vise aussi à fournir un procédé et un dispositif apte à réaliser une telle moquette et un tel tapis.

A cet effet, l'invention a tout d'abord pour objet un tapis, notamment d'habitacle, pour véhicule automobile, comportant au moins une moquette aiguilletée généralement plane recouverte sur son envers d'au moins une matière de revêtemen, caractérisé par le fait que ladite moquette possède une densité en fibres différenciée dans au moins une direction de son plan.

Il est ainsi possible de moduler la densité de fibres en fonction de l'emplacement où se trouve la zone du tapis concernée.

Dans un mode de réalisation particulier de l'invention, ladite enduction possède une masse surfacique inhomogène sur l'envers de ladite moquette.

Un tel agencement peut être réalisé conformément aux enseignements du document FR-A-2 757 116 précité.

Egalement dans un mode de réalisation particulier, le tapis d'habitacle selon l'invention comporte une moquette qui possède une densité en fibres différenciée dans la direction longitudinale du véhicule.

Dans ce cas, ladite moquette peut posséder une densité en fibres inférieure aux emplacements correspondant aux sièges du véhicule par rapport à la densité des emplacements correspondant aux pieds des passagers.

Dans un autre mode de réalisation particulier, le tapis d'habitacle selon l'invention peut comporter une moquette qui possède une densité en fibres différenciée dans la direction transversale du véhicule.

Dans ce cas, ladite moquette peut posséder une densité en fibres inférieure dans sa partie centrale correspondant au tunnel de transmission du véhicule par rapport à la densité de ses parties latérales.

Plus particulièrement, ladite moquette peut posséder une densité en fibres différenciée dans les deux directions de son plan.

L'invention a également pour objet une moquette aiguilletée destinée notamment à la réalisation d'un tapis tel que décrit ci-dessus, caractérisée par le fait qu'elle possède une densité en fibres différenciée dans les deux directions de son plan.

L'invention a également pour objet un procédé de fabrication d'une moquette aiguilletée telle que décrite ci-dessus, comprenant l'étape consistant à réaliser une première nappe de fibres comportant des bandes longitudinales de densités différentes, caractérisé par le fait qu'il comprend l'étape consistant à réaliser des zones transversales de densité en fibres différenciée.

L'étape consistant à réaliser une première nappe de fibres comportant des bandes longitudinales de densités différentes peut être réalisée comme enseigné dans les documents FR-A-2 759 710 ou EP-A-0 315 930.

Dans un mode de mise en oeuvre particulier, l'étape consistant à réaliser des zones transversales de densité en fibres différenciée comprend la formation de plis transversaux sur ladite première nappe.

L'étape consistant à réaliser des zones transversales de densité en fibres différenciée peut, dans un autre mode de mise en oeuvre de l'invention, comprendre la réalisation d'une deuxième nappe, la formation de plis transversaux sur ladite deuxième nappe et l'étalement de ladite deuxième nappe sur la première nappe.

Plus particulièrement, le procédé selon l'invention peut comprendre l'étape consistant à aiguilleter simultanément les deux nappes.

Encore plus particulièrement, les deux nappes peuvent être réalisées dans des matériaux différents.

L'invention a également pour objet un dispositif pour la mise en oeuvre du procédé décrit ci-dessus, comportant un premier convoyeur pour recevoir la première nappe de fibres et un premier chariot agencé pour déposer ladite première nappe sur ledit premier convoyeur en formant des bandes longitudinales de densités différentes, caractérisé par le fait qu'il comprend des moyens pour réaliser des zones transversales de densité en fibres différenciée.

Dans un mode de réalisation particulier, lesdits moyens pour réaliser des zones transversales de densité en fibres différenciée comprennent des moyens pour réaliser des plis transversaux sur ladite nappe.

Plus particulièrement, lesdits moyens pour réaliser des plis transversaux sur ladite première nappe peuvent comprendre un deuxième convoyeur et un deuxième chariot pour déposer ladite première nappe sur ledit deuxième convoyeur en formant des bandes transversales de densités différentes.

Dans un autre mode de réalisation particulier du dispositif selon l'invention, lesdits moyens pour réaliser des zones transversales de densité en fibres différenciée comprennent un deuxième convoyeur et des moyens pour moduler la vitesse d'amenée de ladite première nappe sur ledit deuxième convoyeur.

Dans encore un autre mode de réalisation particulier du dispositif selon l'invention, lesdits moyens pour réaliser des zones transversales de densité en fibres différenciée comprennent des moyens pour réaliser une deuxième nappe, des moyens pour former des plis transversaux sur ladite deuxième nappe, et des moyens pour étaler ladite deuxième nappe sur la première nappe.

Plus particulièrement, le dispositif selon la l'invention peut comprendre des moyens pour aiguilleter simultanément les deux nappes.

On décrira maintenant, à titre d'exemples non limitatifs, des modes de réalisation particuliers de l'invention, en référence aux dessins schématiques annexés dans lesquels :
- la figure 1 est une vue de dessus d'un tapis d'habitacle selon la présente invention ;
- la figure 2 est une vue en perspective d'un premier mode de réalisation d'une nappe de fibre susceptible de fournir une moquette apte à réaliser le tapis d'habitacle de la figure 1 ;
- la figure 3 est une vue de dessus d'un dispositif susceptible de mettre en oeuvre le procédé selon l'invention pour réaliser la nappe de la figure 2 ;
- la figure 4 est une vue en perspective d'un deuxième mode de réalisation d'une nappe de fibre susceptible de fournir une moquette apte à réaliser le tapis d'habitacle de la figure 1 ; et
- la figure 5 est une vue de dessus d'un autre dispositif susceptible de mettre en oeuvre le procédé selon l'invention pour réaliser la nappe de la figure 4.

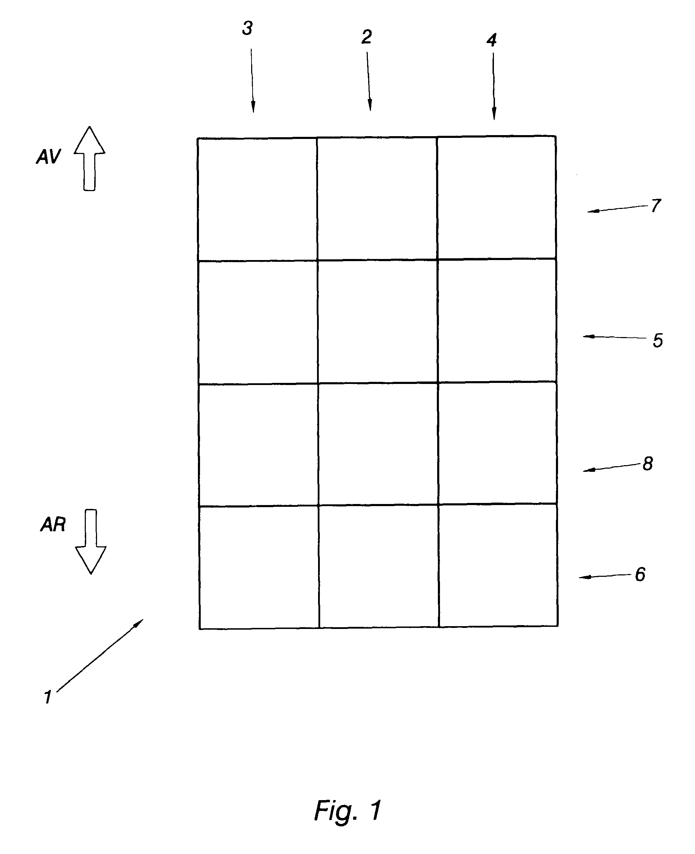

On voit à la figure 1 un tapis de sol 1 selon l'invention pour habitacle de véhicule automobile, très schématisé et, en particulier, représenté en plan et ne montrant pas les reliefs réalisés généralement par thermoformage et correspondant par exemple au tunnel central de transmission et au bouclier avant. Les flèches AV et AR désignent les directions avant et arrière du véhicule.

Le tapis 1 est réalisé à partir d'une moquette dont l'envers, destiné à être appliqué contre le plancher du véhicule, est enduit d'une masse lourde à fonction d'insonorisation comme cela est décrit dans le document FR-A-2 757 116.

Conformément à l'invention, la densité en fibres de la moquette est variable en fonction de la zone considérée du tapis.

Cette densité est plus faible dans la zone centrale 2 correspondant au tunnel de passage de la transmission et où le frottement sera minimum que dans les zones latérales 3 et 4. De même, la densité en fibres est inférieure dans les zones 5 et 6 correspondant respectivement aux sièges avant et arrière à celle des zones 7 et 8 où l'usure sera maximum du fait du frottement des pieds des passagers avant et arrière respectivement.

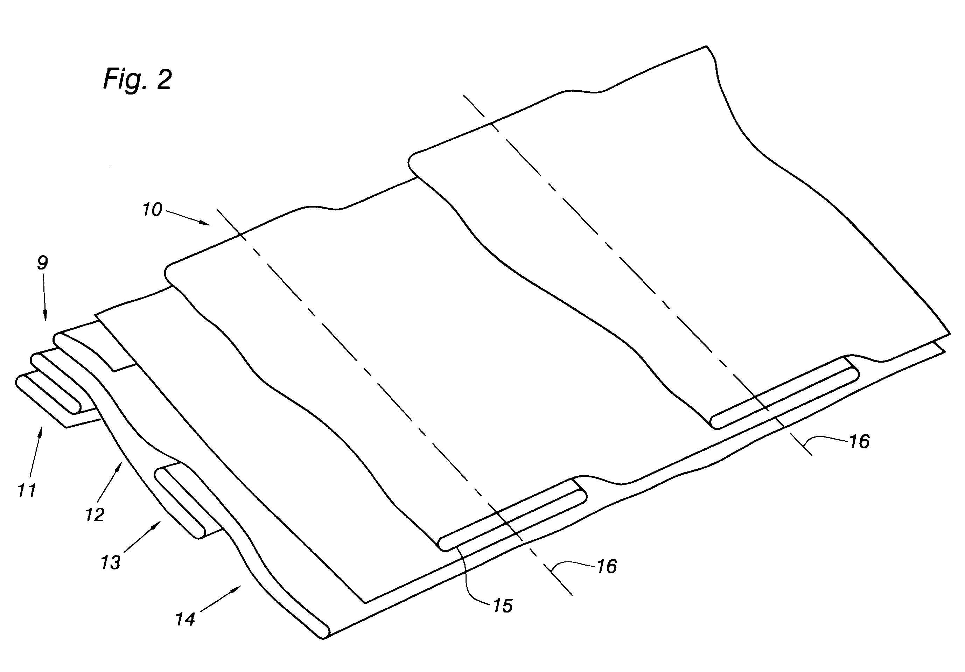

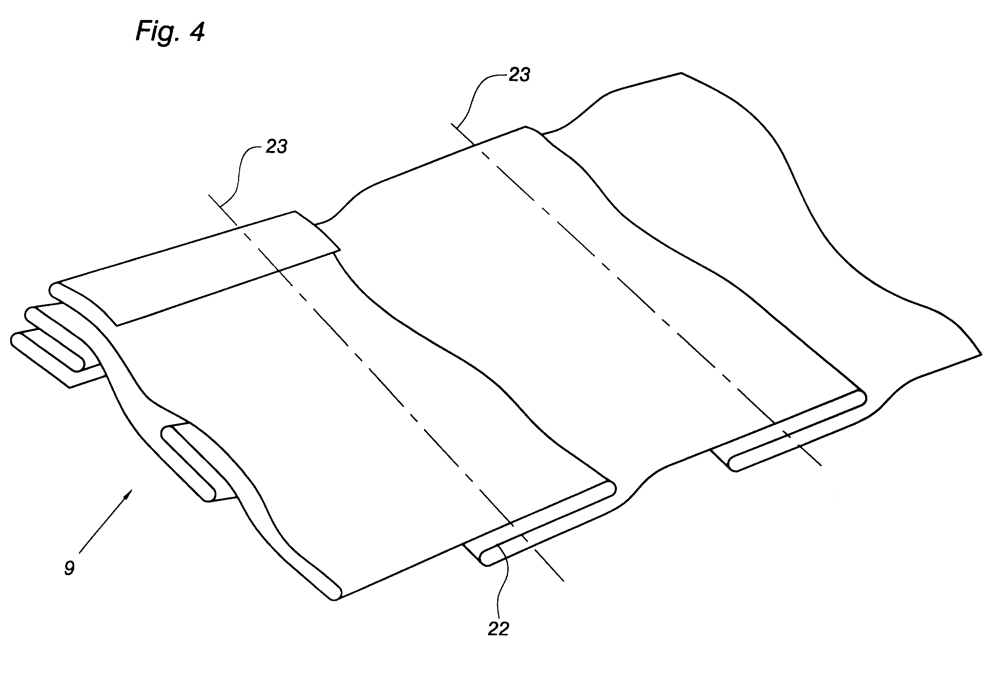

Les figures 2 et 4 représentent des nappes de fibres susceptibles d'être utilisées pour la réalisation de la moquette du tapis de sol 1.

La nappe de la figure 2 est en fait constituée de deux nappes individuelles 9 et 10 superposées.

La première nappe 9 est formées de plis longitudinaux de différentes largeurs d'un voile de fibres de manière à former des bandes de densité en fibres variable. Cette nappe peut être réalisée comme cela est décrit dans le document FR-A-2 759 710. En variante, les plis pourraient avoir tous la largeur de la nappe mais présenter des bandes d'épaisseur variable comme décrit dans le document EP-A-0 315 930.

La nappe 9 comporte ici successivement dans le sens de sa largeur une bande 11 formée de six épaisseurs du voile, une bande 12 formée de deux épaisseurs du voile, une bande 13 formée de quatre épaisseurs du voile, une bande 14 formée de nouveau de deux épaisseurs du voile.

La nappe supérieure 10, de même largeur que la nappe 9 ou de largeur différente, est déposée sur la nappe 9 en plis transversaux 15 se succédant longitudinalement pour former des bandes transversales comportant ici alternativement une épaisseur et trois épaisseurs de voile de fibres.

Une fois les deux nappes 9 et 10 aiguilletées ensemble et enduites de toute manière convenable, la bande obtenue est découpée en tronçons transversaux au milieu des plis 15, le long des lignes 16 de la figure 2. On forme des plaques qui peuvent ensuite être conformées, par exemple par thermoformage, pour fournir le tapis 1.

Dans le sens transversal, les bandes 11 à 14 correspondent respectivement aux zones 7, 5, 8 et 6 du tapis. Dans le sens longitudinal, les bandes où la nappe 10 comporte trois épaisseurs correspondent aux zones latérales 3 et 4, tandis que la bande où la nappe 10 ne présente qu'une seul épaisseur correspond à la zone centrale 2.

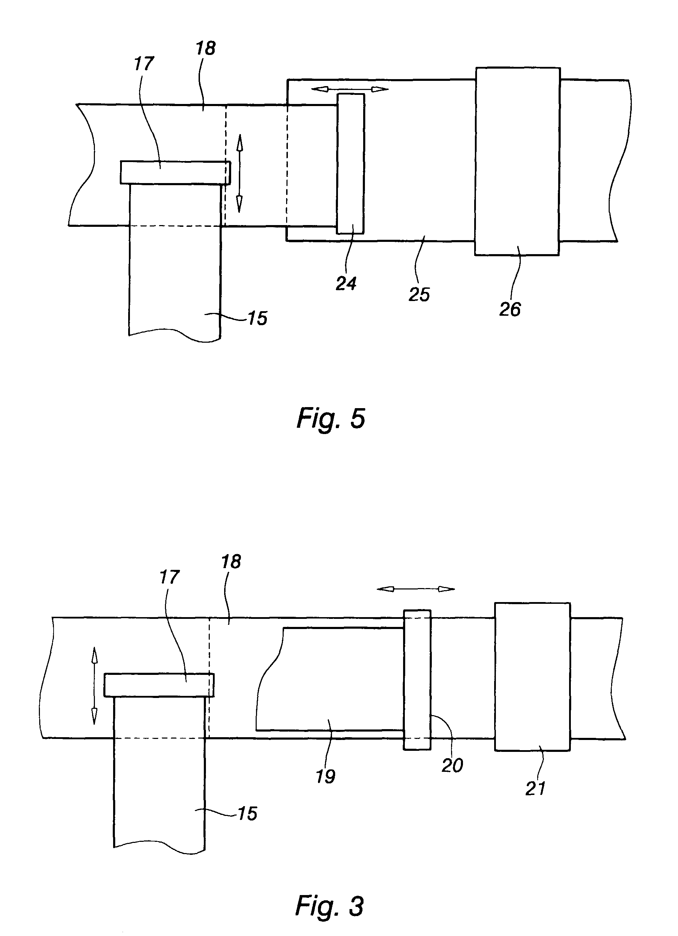

On voit à la figure 3 un dispositif permettant de réaliser la double nappe de la figure 2. Ce dispositif comprend de façon connue un convoyeur 16 d'amenée d'un voile de fibres, un chariot étaleur 17 et un convoyeur de sortie 18 perpendiculaire au convoyeur 16. Le chariot 17 est animé d'un mouvement de va-et-vient transversalement au convoyeur de sortie 18 pour déposer sur ce dernier le voile en plis superposés et former la nappe 9.

Un troisième convoyeur 19 parallèle au convoyeur 18 et situé au-dessus de ce dernier amène un deuxième voile et un deuxième chariot étaleur 20, animé d'un mouvement de va-et-vient parallèlement au convoyeur de sortie 18, dépose ce deuxième voile en plis sur la nappe 9 pour former la nappe 10.

Enfin, un dispositif d'aiguilletage 21 permet d'aiguilleter ensemble les nappes 9 et 10.

Dans le mode de réalisation de la figure 4, la nappe 9 est conformée comme dans le mode de réalisation de la figure 2. Toutefois, dans ce mode de réalisation, cette nappe est elle-même repliée transversalement en plis 22 se succédant longitudinalement pour former de zones de triple épaisseur. La nappe est ultérieurement découpée au milieu de ces zones le long des lignes 23 de la figure 4, et le tapis 1 est réalisé comme précédemment.

Le dispositif de la figure 5 permet de réaliser la nappe de la figure 4. Les convoyeurs 16 et 18 et le chariot 17 sont similaires à ceux de la figure 3.

Un deuxième chariot étaleur 24 est disposé à l'extrémité de sortie du convoyeur 18 au-dessus d'un troisième convoyeur 25 parallèle à ce convoyeur 18 et est animé d'un mouvement de va-et-vient parallèlement à ces deux convoyeurs. Le chariot 24 dépose ainsi la nappe 9 sur le convoyeur 25 en formant les plis 22. Un dispositif d'aiguilletage 26 est disposé en aval.

La description qui précède est donnée en référence à un tapis d'habitacle. Bien entendu, l'invention s'applique aussi à d'autres types de tapis, par exemple pour compartiment à bagages, ou encore de couverture de passage de roues, de tablette arrière ou de pavillon.

## Revendications

1. Tapis (1), notamment d'habitacle, pour véhicule automobile, comportant au moins une moquette aiguilletée généralement plane recouverte sur son envers d'au moins une matière de revêtement, caractérisé par le fait que ladite moquette possède une densité en fibres différenciée dans au moins une direction de son plan.

2. Tapis selon la revendication 1, dans lequel ladite matière de revêtement possède une masse surfacique inhomogène sur l'envers de ladite moquette.

3. Tapis selon l'une quelconque des revendications 1 et 2, dans lequel ladite moquette possède une densité en fibres différenciée dans la direction longitudinale du véhicule.

4. Tapis d'habitacle selon la revendication 3, lequel ladite moquette possède une densité en fibres inférieure aux emplacements (5, 6) correspondant aux sièges du véhicule par rapport à la densité des emplacements (7, 8) correspondant aux pieds des passagers.

5. Tapis selon l'une quelconque des revendications 1 à 4, dans lequel ladite moquette possède une densité en fibres différenciée dans la direction transversale du véhicule.

6. Tapis d'habitacle selon la revendication 5, lequel ladite moquette possède une densité en fibres inférieure dans sa partie centrale (2) correspondant au tunnel de transmission du véhicule par rapport à la densité de ses parties latérales (3, 4).

7. Tapis selon l'une quelconque des revendications 1 à 6, dans lequel ladite moquette possède une densité en fibres différenciée dans les deux directions de son plan.

8. Moquette aiguilletée destinée notamment à la réalisation d'un tapis selon la revendication 7, caractérisée par le fait qu'elle possède une densité en fibres différenciée dans les deux directions de son plan.

9. Procédé de fabrication d'une moquette aiguilletée selon la revendication 8, comprenant l'étape consistant à réaliser une première nappe (9) de fibres comportant des bandes longitudinales de densités différentes, caractérisé par le fait qu'il comprend l'étape consistant à réaliser des zones transversales de densité en fibres différenciée.

10. Procédé selon la revendication 9, dans lequel l'étape consistant à réaliser des zones transversales de densité en fibres différenciée comprend la formation de plis transversaux (22) sur ladite première nappe.

11. Procédé selon la revendication 9, dans lequel l'étape consistant à réaliser des zones transversales de densité en fibres différenciée comprend la réalisation d'une deuxième nappe (10), la formation de plis transversaux (15) sur ladite deuxième nappe et l'étalement de ladite deuxième nappe sur la première nappe (9).

12. Procédé selon la revendication 11, comprenant l'étape consistant à aiguilleter simultanément les deux nappes.

13. Procédé selon l'une quelconque des revendications 11 et 12, dans lequel les deux nappes sont réalisées dans des matériaux différents.

14. Dispositif pour la mise en oeuvre du procédé selon l'une quelconque des revendications 9 à 13, comportant un premier convoyeur (18) pour recevoir la première nappe de fibres et un premier chariot étaleur (17) agencé pour déposer ladite première nappe sur ledit premier convoyeur en formant des bandes longitudinales de densités différentes, caractérisé par le fait qu'il comprend des moyens (19, 20 ; 24 25) pour réaliser des zones transversales de densité en fibres différenciée.

15. Dispositif selon la revendication 14, dans lequel lesdits moyens pour réaliser des zones transversales de densité en fibres différenciée comprennent des moyens (24, 25) pour réaliser des plis transversaux sur ladite nappe.

16. Dispositif selon la revendication 15, dans lequel lesdits moyens pour réaliser des plis transversaux sur ladite première nappe comprennent un deuxième convoyeur 25) et un deuxième chariot étaleur (24) pour déposer ladite première nappe sur ledit deuxième convoyeur en formant des bandes transversales de densités différentes.

17. Dispositif selon la revendication 14, dans lequel lesdits moyens pour réaliser des zones transversales de densité en fibres différenciée comprennent un deuxième convoyeur et des moyens pour moduler la vitesse d'amenée de ladite première nappe sur ledit deuxième convoyeur.

18. Dispositif selon la revendication 14, dans lequel lesdits moyens pour réaliser des zones transversales de densité en fibres différenciée comprennent des moyens (19, 20) pour réaliser une deuxième nappe, des moyens pour former des plis transversaux sur ladite deuxième nappe, et des moyens pour étaler ladite deuxième nappe sur la première nappe.

19. Dispositif selon la revendication 18, comprenant des moyens (21 ; 26)pour aiguilleter simultanément les deux nappes.
